# EUROPEAN PATENT APPLICATION

(11) **EP 1 655 947 A1**
(43) Date of publication of application: **10.05.2006**
(21) Application number: 05023700.7
(22) Date of filing: 28.10.2005
(51) Int. Cl.: H04N 1/21, G06K 19/06, H04N 1/00

(54) **Data transmission system between two separate terminals and method thereof**

(30) Priority: 28.10.2004 KR 2004086862
(71) Applicant: Samsung Electronics Co., Ltd., Suwon-si, Gyeonggi-Do (KR)
(72) Inventor: Lee, Sang-Ho, Yeongtong-gu Suwon-si Gyeonggi-do (KR)
(74) Representative: Grünecker, Kinkeldey, Stockmair & Schwanhäusser Anwaltssozietät

(57) **Abstract**

A data transmission system between two separate terminals is disclosed. The data transmission system includes a first memory for storing data, an encoder for encoding the data and creating an image code, a first terminal having a display unit for displaying the image code, and a second terminal having a sensor for photographing the image code, a decoder for restoring the data to the original data by decoding the photographed image code and a memory for storing the restored data.

## Description

The present invention relates generally to a data transmission system between two separate terminals and a method thereof, and more particularly to a data transmission system and method using images and image pickup and a method thereof.

Various types of data can be stored in the memory of a terminal. For example, the data may include an image, a streaming image, a phone book, a memo, etc. Whatever the content, the data can be transferred and stored to a PC or a memory chip by using a serial cable, a USB, etc.

In order to store the data in an external storage space of a terminal, a cable is required. As the capacity of the storage memory increases, greater transfer speeds supported by such a cable is demanded. In the case of a terminal that supports a camera or camcorder function, a storage space of gigabyte or more might be required. Additionally, in the present state of transmission speeds, a long time is required to store data provided from the terminal in another external storage space. Accordingly, if an error occurs while the data is stored, the transfer of the data must be re-performed which causes a waste of time and greatly reduces user friendliness.

In light of the change to the ultramodern information society and the current trend of terminal developments and applications, there is room for improvement of the above-described storing method. In other words, in a state that data to be stored becomes more diverse and the storage capacity for storing such data increases, it is inefficient to maintain the above-described storing method. This is because an additional device would be required and the speed of storage would be greatly lowered in proportion to the storage capacity.

Accordingly, the present invention has been designed to solve at least the above and other problems occurring in the prior art.

It is the object of the present invention to provide a data transmission system and method between two separate terminals that can perform a data transmission at a high speed without the necessity of an additional device.

This object is solved by the subject matter of the independent claims.

Preferred embodiments are defined by the subject matter of the dependent claims.

In order to accomplish the above, there is provided a data transmission system that includes a first memory for storing data, an encoder for encoding the data and creating an image code, a first terminal having a display unit for displaying the image code, and a second terminal having a sensor for photographing the image code, a decoder for restoring the data to the original data by decoding the photographed image code and a memory for storing the restored data.

In accordance with another aspect of the present invention, there is provided a method, provided with first and second terminals, for transmitting data from the first terminal to the second terminal, including the steps of encoding the data and displaying an image code by the first terminal, photographing the displayed image code by the second terminal, restoring the data to the original data by decoding the photographed image code by the second terminal, and storing the restored data by the second terminal.

The present invention will be more apparent from the following detailed description taken in conjunction with the accompanying drawings, in which:
FIGs. 1A and 1B are diagrams illustrating a coded image of a terminal display unit expressed by simple mapping;
FIGs. 2A and 2B are diagrams illustrating an image-code forming process according to a preferred embodiment of the present invention;
FIGs. 3A to 3D are diagrams illustrating a process performed so that a color image code can be displayed on a terminal display unit according to a preferred embodiment of the present invention;
FIGs. 4A to 4D are diagrams illustrating a process performed so that a picked-up color image code is restored to the data and stored according to a preferred embodiment of the present invention;
FIG. 5 is a diagram illustrating one construction of a data transmission system according to a preferred embodiment of the present invention;
FIG. 6 is a diagram illustrating another construction of a data transmission system according to a preferred embodiment of the present invention; and
FIGs. 7A and 7B are diagrams illustrating the display states when a transmitter side uses a display unit to perform the synchronization in a data transmission system according to a preferred embodiment of the present invention.

Preferred embodiments of the present invention will be described in detail hereinafter with reference to the accompanying drawings. In the following description of the present invention, the same reference numerals are used for the same elements even in different drawings. Although a number of specific features, such as an element, the number of pixels, a specified numeric key, etc., are given below, they are presented for a better understanding of the present invention only. Also, it will be clear to those skilled in the art that the present invention can easily be practiced without such specific features or through their modifications. Additionally, a detailed description of known functions and configurations incorporated herein will be omitted when it may obscure the subject matter of the present invention.

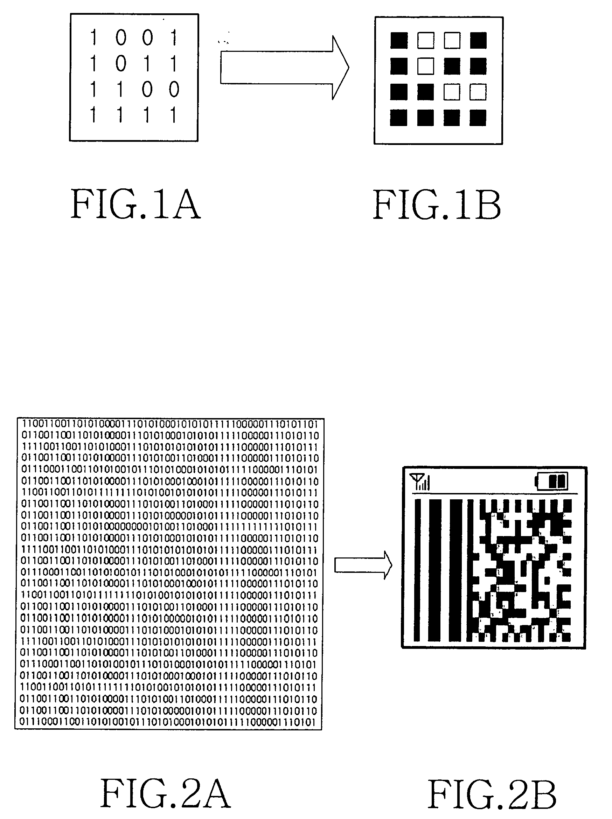

FIGs. 1A and 1B are diagrams illustrating a coded image of a terminal display unit expressed by simple mapping.

It is assumed that data stored in a terminal is displayed on a black/white display unit {for example, 128x 128 LCD (Liquid Crystal Display)}. In this case, the data is composed of "0" and "1", and by performing a simple mapping without any proper standard, "0" is expressed in white while "1" is expressed in black. Accordingly, in this case, the data of 2* 16.384 Kbits corresponds to one frame of the image.

FIGs. 2A and 2B are diagrams illustrating an image-code forming process according to a preferred embodiment of the present invention.

FIG. 2A illustrates data stored in the terminal. FIG 2B illustrates an image displayed on a display unit, which is obtained by converting "0" and "1" of the data stored as shown in FIG. 2A by a specified coding method. The image as displayed above has the meaning of the data mapped on a shape just like a hot code, and this makes it possible to transmit much more information. However, the image displayed on the display unit is not a still hot-code image, but a streaming encoded image similar to a successive hot-code shape according to the structure and size of the stored data. In the following description, the image will be referred to as an image code.

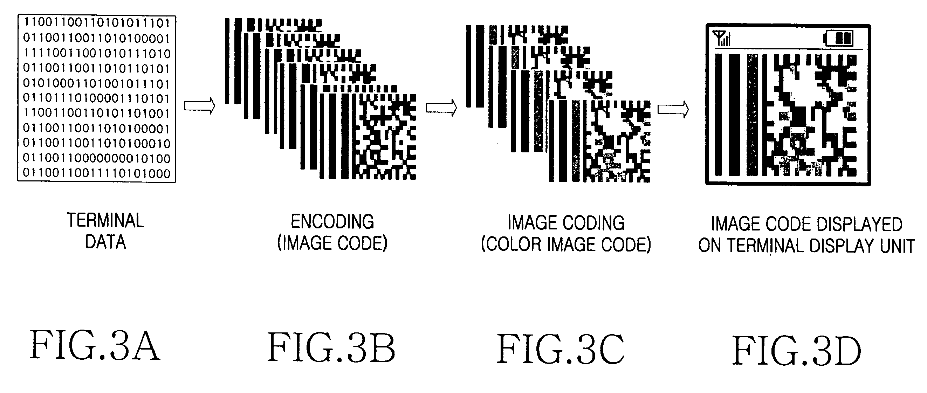

FIGs. 3A to 3D are diagrams illustrating a process performed so that a color image code can be displayed on a terminal display unit according to a preferred embodiment of the present invention.

FIG. 3A illustrates data stored in the terminal, and FIG. 3B illustrates an encoded image code. FIG. 3C illustrates a color image code, and FIG. 3D illustrates an image code displayed on a display unit of the terminal.

The transmitter side terminal performs the transmission process in the order of FIGs. 3A → 3B → 3C → 3D.

Two-bit information can be sent through one black/white pixel while 8-bit information can be sent through one color pixel. Accordingly, in the case of a terminal having a color display unit, an even larger amount of data can be transmitted at a high speed by converting the data into the color image code. In this case, the color image code has the same structure as the black/white image code.

If the capacity of data stored in the terminal is very large, it is difficult to express the data by one frame. In this case, as shown in FIG 3B, an image code corresponding to several successive frames are provided to express the data.

In the case of a terminal having a color display unit, several successive frames can be compressed to one frame using color information of 8 bits. Although FIG. 3B illustrates 6 frames and FIG. 3C illustrates 4 frames, this is not connected with the number of frames in the actual process, but is just for a better understanding of the present invention. In other words, by converting the black/white code into the color image code, the compression rate becomes higher. Because RGB (Red, Green and Blue) can be expressed by 8 bits, 2⁸ types of compression can be performed.

Additionally, in order to further raise the transmission speed, the color image code may further be compressed using MPEG4, that is, the existing image compression method.

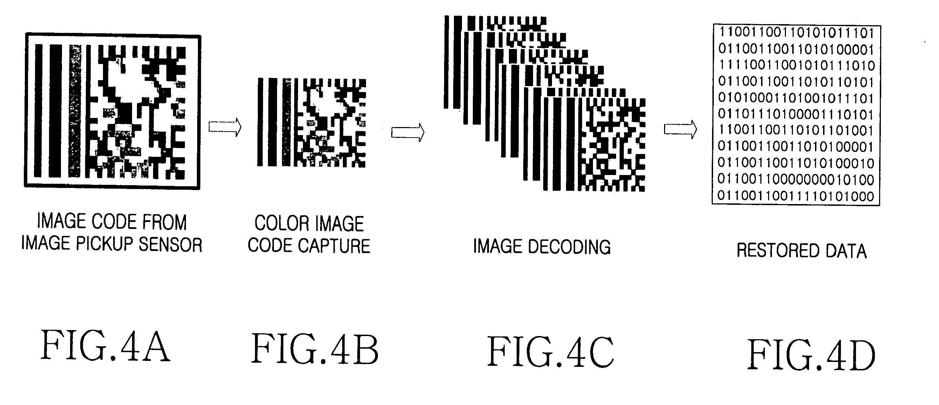

FIGs. 4A to 4D are diagrams illustrating a process performed so that a picked-up color image code is restored to the data and stored according to a preferred embodiment of the present invention.

FIG. 4A illustrates a picked-up image code, and FIG. 4B illustrates a captured color image code. FIG 4C illustrates decoded images, and FIG 4D illustrates restored data.

The receiver side terminal performs the process for reception and storage of data in the order of FIGs. 4A → 4B → 4C -7 4D.

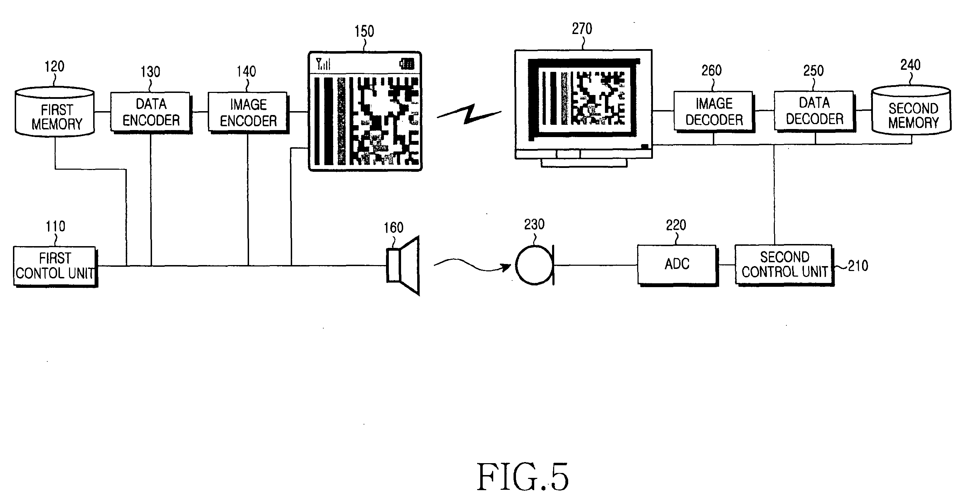

FIG 5 is a diagram illustrating one construction of a data transmission system according to a preferred embodiment of the present invention.

A first terminal includes a first memory 120 for storing data, encoders 130 and 140 for encoding the data and creating an image code, a display unit 150 for displaying the image code, a speaker 160, and a first control unit 110 for controlling the first terminal and in particular the encoding.

A second terminal includes a sensor 270 for photographing the image code, decoders 250 and 260 for restoring the data to the original data by decoding the photographed image code, a second memory 240 for storing the restored data, a microphone 230 for receiving and converting sound output from the speaker 160 into an electric signal, an analog-to-digital converter (ADC) 220 for converting the electric signal into a digital signal, and a second control unit 210 for controlling the second terminal and in particular the decoding in synchronization with the digital signal.

The sensor 270 is a CCD (Charge Coupled Device) sensor for picking up an image.

The method for synchronization between the first terminal and the second terminal in order to perform the data transmission according to the present invention will now be described.

In order to transmit a large capacity of information in the form of an image code, many image frames need to be transmitted at a very high speed. For this, a separate discriminator (for example, image, text, etc.) for the synchronization between the transmitter side and the receiver side is required.

This discriminator may indicate the start of the transmission from the transmitter side, start and end time points of data (i.e., image code) to be transmitted, a group of transmitted data, etc. Although the discriminator may be displayed on the display unit by a separate discrimination head bit, it is preferable to send a specified low-frequency signal through the speaker 160 of the first terminal as a discriminator. In practice, the display unit 150 of the first terminal and an image pickup sensor 270 of the second terminal should be separated from each other for a certain distance, and thus a prescribed frequency signal may be transmitted to the microphone 230 of the second terminal 230 through the speaker 160 of the first terminal as the discriminator.

Through the above-described synchronization, the decoding can be performed more efficiently. That is, if text data and image data are mixed, the receiver side does not need to decode the text data already known, but can directly store the text data through the synchronization. The receiver side decodes only the image data while storing the decoded image data. Additionally, since the capacity of the data can be known, the receiver side can determine in advance if the reception of the data can be completed according to the remaining capacity of the memory. Further, the format designation information can be known according to the format of the transmitted data such as a streaming image, captured image, phone book, memo, schedule, etc., the receiver side can directly find a memory area (for example, if the data is phone book data, a memory area allocated in advance for storing phone numbers in the memory of the receiver side terminal) allocated to the corresponding format, and store the transmitted data in the appropriate memory area. Accordingly, the load of the control unit is reduced and the efficiency of the system is increased.

Now, a key tone {i.e., DTMF (Dual Tone Multi Frequency)} output from the speaker, which can be used as synchronization data in the receiver, will be explained in detail.

When the data transmission starts and ends, the start and the end of the data transmission can be reported by a sound produced by a combination of numeric keys. For example, the start of the data transmission may be reported by the key tone produced by a combination of numeric keys "1234", and the end of the data transmission can be reported by the key tone produced by a combination of numeric keys "6789". Additionally, the size and the format of the data to be transmitted can be reported by a combination of the numeric keys. For example, the streaming data may be distinguished by inputting the numeric key "1".

By combining all of the procedures described above, in the case of transmitting the streaming image coded as 30 frames, the following synchronization data may be transmitted. 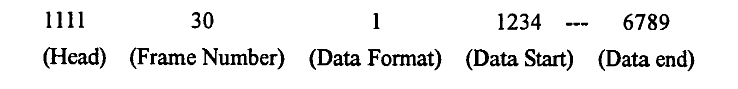 (Head) (Frame Number) (Data Format) (Data Start) (Data end)

Specifically, the synchronization data may be transmitted in a manner that a frequency signal corresponding to the key "1" is successively sent four times, frequency signals corresponding to the keys "3" and "0" are sent once, frequency signal corresponding to the key "1" is sent once, frequency signals corresponding to the keys "1", "2", "3" and "4" are sent once, and then frequency signals corresponding to the keys "6", "7", "8" and "9" are sent once when the data transmission has ended.

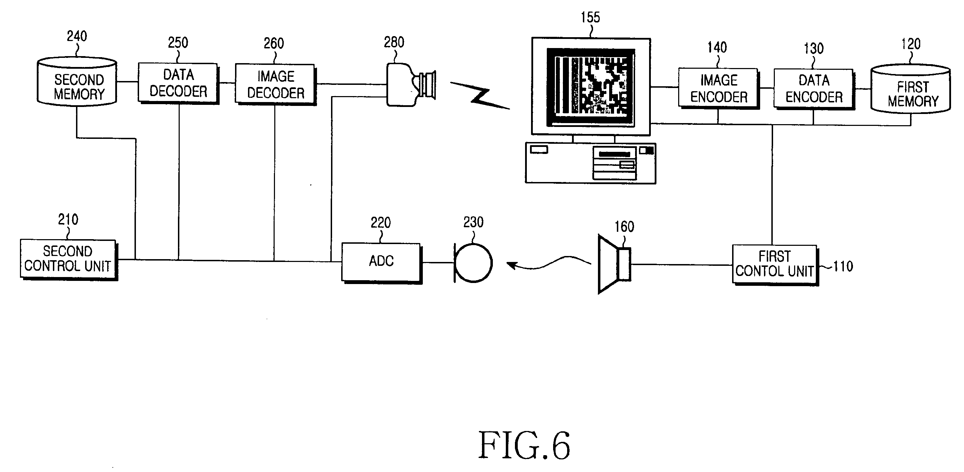

FIG. 6 is a diagram illustrating another construction of a data transmission system according to a preferred embodiment of the present invention.

A large amount of information may be transmitted from the terminal to the PC or external storage medium, or may be transmitted from the PC or external storage medium (which is referred to as a second terminal) to the terminal. In both cases, the same process as described above can be performed.

As illustrated in FIG. 6, in order to transfer the data stored in the PC to the terminal, the data stored in the PC should be converted into the color image code and then displayed on a monitor 155. For this, the data is restored to the original data by decoding the image that was photographed by a camera mounted on the terminal and coded, and then the restored data is stored in the memory.

Consequently, the detailed operation of the system of FIG. 6 is the same as that of the system of FIG. 5 as described above. The only differences are that the transmitter is the PC or external storage medium having a display unit implemented by a dedicated or general LCD 155 and the receiver side is the terminal provided with a camera 280 having a CCD sensor.

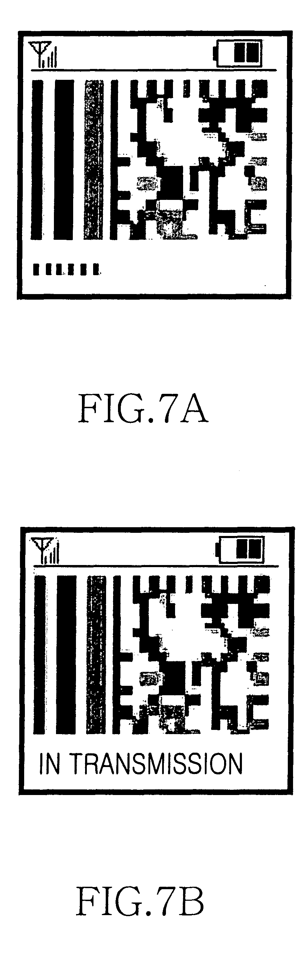

FIGs. 7A and 7B are diagrams illustrating the display states when the transmitter side uses the display unit to perform the synchronization in a data transmission system according to the preferred embodiment of the present invention.

Instead of using the speaker or the microphone as shown in FIGs. 5 and 6, a bar or a specified pattern as shown in FIG. 7a or a text as shown in FIG. 7B may be displayed to indicate that the data is now being transmitted. Such indication can also be sensed by the image pickup sensor of the receiver side terminal in the same manner as the image code.

More specifically, the camera of the receiver side terminal receives the entire image transmitted from the transmitter side terminal as a single unit of a frame. The image received in the receiver side terminal includes a region (area) occupied by data that the transmitter side actually intends to transmit and a region occupied by information included for providing control and/or status information. In the receiver side terminal, the data and the control and/or status information are input to the image decoder together, but the decoding thereof are separately performed. That is, the data is sent to the data decoder (250 in FIG. 5), and the control and/or status information is sent to the second control unit (210 in FIG. 5).

The second control unit decodes the control and/or status information as follows. If the second control unit can detect the type of the transmitted data (for example, a phone book, schedule, image, streaming image, etc.) by decoding the information, the storage area thereof can be determined in advance, and the data restoration process can be performed in a separate manner. By processing the restoration of text data such as the phone book and the restoration of image or streaming image in a separate manner, the time required for the restoration can greatly be reduced. Additionally, the second control unit can recognize the status of transmission such as "In Transmission", "Transmission Completed" or the proceeding degree of transmission (for example, it may be engaged in advance that the proceeding degree of transmission is indicated as several bars displayed on a part of the display unit with its number changed according to the proceeding degree) by decoding the information. Accordingly, this information corresponds to the status information.

As described above, according to the present invention, an additional device is not required when data is transmitted between two separate terminals, and thus the system becomes simple, low-priced and convenient to use. Additionally, a series of data in the form of images is transmitted in a three-dimensional manner, and thus the transmission speed is greatly improved.

While the present invention has been shown and described with reference to certain preferred embodiments thereof, it will be understood by those skilled in the art that various changes in form and details may be made therein without departing from the scope of the present invention as defined by the appended claims.

## Claims

1. A data transmission system, comprising:
a first terminal having a first memory for storing data, an encoder for encoding the data and creating an image code, and a display unit for displaying the image code; and
a second terminal having a sensor for photographing the image code, a decoder for restoring the data to the original data by decoding the photographed image code, and a memory for storing the restored data.

2. The data transmission system as claimed in claim 1, wherein the first terminal further comprises a speaker and a first control unit, and the second terminal further comprises a microphone for receiving and converting sound output from the speaker into an electric signal, an analog-to-digital converter for converting the electric signal into a digital signal and a second control unit for controlling the decoding in accordance with the digital signal.

3. The data transmission system as claimed in claim 2, wherein a first control unit of the first terminal creates key tones that indicate a header, the number of frames, a data format, a start of data and an end of data, and the key tones are output as sound through the speaker.

4. The data transmission system as claimed in claim 3, wherein the second control unit of the second terminal determines the type of data and determines whether to perform the decoding through the decoder according to the header included in the received key tone.

5. The data transmission system as claimed in one of claims 1 to 4, wherein the display unit comprises an LCD display, and the sensor comprises a charge coupled device.

6. The data transmission system as claimed in one of claims 1 to 4, wherein the display unit comprises an LCD display, and the sensor comprises a camera.

7. The data transmission system as claimed in claim 6, wherein the first terminal comprises a camera phone, and the second terminal comprises a personal computer.

8. The data transmission system as claimed in one of claims 1 to 7, wherein the image code is a color image code.

9. The data transmission system as claimed in one of claims 1 to 4, wherein the display unit of the first terminal has a first display window for displaying the image code and a second display window for displaying synchronization data which are provided on a same display screen.

10. The data transmission system as claimed in claim 9, wherein an image pickup element of the second terminal photographs the display screen, and the second terminal further comprises a control unit that synchronizes with the first terminal by analyzing the photographed synchronization.

11. The data transmission system as claimed in claim 9 or 10, wherein the synchronization data comprises at least one of a specified pattern and a text.

12. A method for transmitting data from a first terminal to a second terminal, comprising the steps of:
encoding the data and displaying an image code by the first terminal;
photographing the displayed image code by the second terminal; and
restoring the data to the original data by decoding the photographed image code by the second terminal, and storing the restored data.

13. The method as claimed in claim 12, further comprising the steps of:
outputting a specified sound by the first terminal; and
receiving and recognizing by the second terminal the sound output from the first terminal as a synchronization signal for decoding the image code.

14. The method as claimed in claim 12 or 13, wherein the sound output from the first terminal includes key tones that indicate a header, the number of frames, a data format, a start of data and an end of data, and that are output through the speaker.

15. The method as claimed in claim 13, wherein the second terminal senses the type of data and determines whether to perform the decoding according to the header included in the received key tone.
